(19) Europäisches Patentamt
European Patent Office
Office européen des brevets

(11) **EP 3 984 127 B1**

(12) **EUROPÄISCHE PATENTSCHRIFT**

(45) Veröffentlichungstag und Bekanntmachung des Hinweises auf die Patenterteilung:
**17.04.2024 Patentblatt 2024/16**

(21) Anmeldenummer: **20724502.8**

(22) Anmeldetag: **07.05.2020**

(51) Internationale Patentklassifikation (IPC):
**H02P 6/18** (2016.01) **H02P 27/08** (2006.01)

(52) Gemeinsame Patentklassifikation (CPC):
**H02P 6/183; H02P 27/08**

(86) Internationale Anmeldenummer:
**PCT/EP2020/062706**

(87) Internationale Veröffentlichungsnummer:
**WO 2020/249329 (17.12.2020 Gazette 2020/51)**

(54) **VERFAHREN ZUR BESTIMMUNG EINER ROTORLAGE EINER ELEKTRISCHEN, ROTIERENDEN MASCHINE SOWIE EINE ELEKTRISCHE, ROTIERENDE MASCHINE ZUR DURCHFÜHRUNG EINES SOLCHEN VERFAHRENS**

METHOD FOR DETERMINING A ROTOR POSITION OF AN ELECTRIC ROTATING MACHINE, AND AN ELECTRIC ROTATING MACHINE FOR CARRYING OUT A METHOD OF THIS KIND

PROCÉDÉ DE DÉTERMINATION D'UNE POSITION DE ROTOR D'UNE MACHINE ROTATIVE ÉLECTRIQUE ET MACHINE ROTATIVE ÉLECTRIQUE POUR LA MISE EN OEUVRE D'UN TEL PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2019 DE 102019208497**

(43) Veröffentlichungstag der Anmeldung:
**20.04.2022 Patentblatt 2022/16**

(73) Patentinhaber: **Robert Bosch GmbH
70442 Stuttgart (DE)**

(72) Erfinder:
• **VOLLMER, Ulrich
73235 Weilheim (DE)**
• **ROETZER, Marco
78736 Epfendorf (DE)**

(56) Entgegenhaltungen:
**DE-A1-102016 205 462     DE-A1-102017 210 071
US-A1- 2007 132 415**

## Beschreibung

Stand der Technik

Die Erfindung betrifft ein Verfahren zur Bestimmung einer Rotorlage einer rotierenden, elektrischen Maschine.

Solch ein Verfahren ist beispielsweise in der Offenlegungsschrift DE 10 2009 039 672 A1 offenbart. Hierbei wird eine geberlose Regelung offenbart, welche versucht, die Rotorposition ohne Verwendung eines Positionssensors zu ermitteln. Dabei kommen bei geringen Drehzahlen sogenannte anisotropiebasierte Verfahren zum Einsatz, welche über die magnetische Anisotropie der Maschine die Rotorlage bestimmen. Weitere Verfahren zur Rotorlagebestimmung sind beispielsweise in der DE 10 2017 210071 A1 und der DE 10 2016 205462 offenbart.

Bei hochdynamischen Antrieben wird zur Erzeugung der einstellbaren Phasenspannung der elektrischen Maschinen in der Regel ein Wechselrichter mit Pulsweitenmodulation (PWM) verwendet. Die Steuersignale des Wechselrichters werden mit Hilfe einer Raumzeigermodulation berechnet, welche die von der Regelung ermittelten vorgegebenen Spannungen in PWM-Tastverhältnisse umrechnet. Die PWM-Tastverhältnisse werden typischerweise mittenzentriert ausgegeben. Die vorgegebenen Spannungen werden vom Regler beispielsweise in Abhängigkeit von der Rotorlage und den erfassten Phasenströmen sowie von gewissen Anforderungen an die elektrische Maschine, z. B. Drehzahl oder Drehmoment, bestimmt.

Bei gängigen anisotropiebasierten Verfahren wird durch gezielte Veränderung der vorgegebenen Spannungen eine lageabhängige Stromänderung produziert, indem zusätzlich zu den von der Regelung vorgegebenen Spannungen hochfrequente Spannungen induziert werden. Die sich dadurch ergebende Stromänderung kann daraufhin durch Strommessungen der jeweiligen Phasenströme der elektrischen Maschine zu bestimmten Zeitpunkten erfasst werden. In Abhängigkeit von den erfassten Phasenströmen und den eingespeisten hochfrequenten Spannungen kann anschließend die Rotorlage bestimmt werden, wie dies beispielsweise in der oben genannten Offenlegungsschrift offenbart ist.

Offenbarung der Erfindung

Die Erfindung betrifft ein Verfahren nach Anspruch 1.

Unter Wechselrichter ist beispielsweise ein B6-Brücke zu verstehen, welche wiederum aus drei Halbbrücken aufgebaut ist. Jede der Halbbrücken weist einen Mittelabgriff für die entsprechende Phase der elektrischen Maschine auf und ist jeweils von dem Mittelabgriff aus über je einen Halbleiterschalter mit einem positiven und einem negativen Potential verbunden.

Die Injektionsspannungen werden mittels eines Reglers bestimmt. Die Injektionsspannungen setzen sich dabei aus durch den Regler zur Ansteuerung der elektrischen Maschine vorgegebenen Spannungen, welche einen entsprechenden Grundwellenstrom erzeugen, und zusätzlichen hochfrequenten Spannungen zusammen. Der Grundwellenstrom sorgt hierbei für den gewünschten Betrieb der Maschine beispielsweise mit einer vorbestimmten Drehzahl oder auch einem vorgegebenen Drehmoment. Durch die hochfrequenten Spannungen kann des Weiteren eine lageabhängige Stromänderung erzielt werden, wobei aus dieser Stromänderung Rückschlüsse auf die Rotorlage der elektrischen Maschine getroffen werden können.

Unter Reglerabtastperiode ist hierbei die Zeitdauer zwischen zwei Reglerabtastschritten zu verstehen, welche dazu dienen, die an die elektrische Maschine anzulegenden Injektionsspannungen zu bestimmen. Eine Reglerabtastperiode kann hierbei größer gewählt werden als ein PWM-Periodendauer, wodurch mehrere PWM-Perioden in eine Reglerabtastperiode fallen.

Der Wechselrichter wird in wenigstens einer PWM-Periode nach der Reglerabtastperiode mit den zuvor bestimmten PWM-Tastverhältnissen angesteuert. Dieser Ansteuer-Zeitraum fällt dann bereits unter die nächste Reglerabtastperiode, während welcher aufgrund der in dieser Reglerabtastperiode gemessenen Phasenströme die Injektionsspannungen für den Anschluss an diese Reglerabtastperiode bestimmt wird.

Unter zeitgleichem Messen der Phasenströme kann dabei verstanden werden, dass die Ströme zu einem gleichen Zeitpunkt abgetastet werden. Wobei die Abtastzeitpunkte aufgrund von Messtoleranzen oder ähnlichem minimal voneinander abweichen können und trotzdem noch unter den Begriff "zeitgleich" fallen.

Unter passivem Schaltzustand ist zu verstehen, dass alle Phasen der elektrischen Maschine auf dem gleichen Potential liegen und folglich kurzgeschlossen sind. Das Gegenteil hiervon ist entsprechend ein aktiver Schaltzustand.

Ein solch passiver Schaltzustand endet, sobald die Spannung wenigstens einer der auf gleichem Potential befindlichen Phasen umgeschaltet wird.

Eine zeitliche Änderung des magnetischen Flusses in der elektrischen Maschine induziert in den elektrisch leitfähigen Materialien dieser Maschine Wirbelströme. Bei geringen Drehzahlen ändern sich die magnetischen Flüsse vorwiegend in aktiven Schaltzuständen, in welchen unterschiedliche Phasen mit unterschiedlichen Potentialen des Wechselrichters verbunden sind.

Die Wirbelströme in der elektrischen Maschine bewirken, dass jeder Phasenstrom einen Stromanteil beinhaltet, welcher nicht zu der magnetischen Flussbildung beiträgt. Dies liegt darin begründet, dass sowohl der Phasenstrom als auch die Wirbelströme einen magnetischen Fluss erzeugen. Diese beiden Flussanteile wirken in entgegengesetzter Richtung und heben sich so teilweise auf. Sind die Wirbelströme abgeklungen, so ist der nicht-flussbildende Stromanteil vernachlässigbar klein.

In Zeitabschnitten, in welchen die Phasen der elektrischen Maschine dagegen kurzgeschlossen sind, ist die Änderung der magnetischen Flüsse in der elektrischen Maschine sehr klein. In diesen Zeitabschnitten klingen daher die Wirbelströme ab.

Des Weiteren sind die Wirbelströme stark temperaturabhängig.

Als geringe Drehzahl kann in etwa ein Wert unterhalb von 10% der Nenndrehzahl der elektrischen Maschine angesehen werden. Liegt die Drehzahl darüber, kann ein klassisches grundwellenbasierte Verfahren angewandt werden, um die Rotorlage zu bestimmen.

Vorteilhaft ist hierbei, dass die PWM-Tastverhältnisse derartig bestimmt werden können, dass eine Phasenstrommessung zu einem Zeitpunkt durchgeführt werden kann, zu welchem die Wirbelströme annähernd oder gar gänzlich abgeklungen sind. Hierdurch können Fehler bei der Bestimmung der Rotorlage aufgrund solcher Wirbelströme minimiert werden. Besonders bei einem solchen anisotropiebasierten Verfahren können kleine Abweichungen im gemessenen Phasenstrom zu gravierenden Fehlern bei der Bestimmung der Rotorlage führen. Dies gilt insbesondere, da die Stromänderung aufgrund von den eingespeisten hochfrequenten Spannungen klein ist und daher die Wirbelströme im Verhältnis zu der Stromänderung durch die hochfrequenten Spannungen nicht vernachlässigbar sind.

Des Weiteren kann die Temperaturabhängigkeit des Verfahrens verringert werden.

Durch das anisotropiebasierte Verfahren kann insbesondere eine geberlose Bestimmung der Rotorlage erfolgen, welche die Eigenschaften der elektrischen Maschine während des Betriebs nur vernachlässigbar verschlechtert. Außerdem ist es erfindungsgemäß auch möglich, dass durch das Verfahren das Ergebnis eines vorhandenen Rotorlagesensors validiert wird.

Gemäß einer Ausgestaltung des erfindungsgemäßen Verfahrens ist vorgesehen, dass im Verfahrensschritt b die PWM-Tastverhältnisse derartig bestimmt werden, dass eine Zeitdauer des passiven Schaltzustands, während welchem im Verfahrensschritt d gemessen werden soll, maximal lang ist.

Vorteilhaft ist hierbei, dass vor der Phasenstrommessung ein möglichst langer passiver Schaltzustand anliegt, wodurch die Wirbelströme ausreichend Zeit zum Abklingen erhalten.

In einer Ausgestaltung des erfindungsgemäßen Verfahrens ist vorgesehen, dass im Verfahrensschritt b die PWM-Tastverhältnisse derartig bestimmt werden, dass je ein passiver Schaltzustand in der PWM-Perioden-Mitte und am PWM-Perioden-Ende endet, und dass im Verfahrensschritt d das Messen wenigstens des ersten Phasenstroms und des zweiten Phasenstroms innerhalb der PWM-Periode je einmal pro passivem Schaltzustand erfolgt.

Vorteilhaft ist hierbei, dass die Bestimmung der Rotorlage exakter erfolgen kann, da mehrere Phasenstrom-Messwerte pro PWM-Periode vorliegen.

Gemäß einer Ausgestaltung des erfindungsgemäßen Verfahrens ist vorgesehen, dass im Verfahrensschritt b die PWM-Tastverhältnisse derartig bestimmt werden, dass Zeitdauern der beiden passiven Schaltzustände, während welcher im Verfahrensschritt d gemessen werden sollen, im Wesentlichen gleich groß sind.

Unter im Wesentlichen ist dabei eine Abweichung von einigen Prozent zu verstehen, welche beispielsweise durch äußere Störeinflüsse oder herstellungsbedingten Toleranzen bedingt ist.

Vorteilhaft ist hierbei, dass die Wirbelströme in beiden passiven Schaltzuständen gleich stark abklingen können, um ein gleichmäßiges Ergebnis bei der Phasenstrommessung zu erhalten. Zudem können die beiden passiven Schaltzustände derartig gewählt werden, dass einmal alle Phasen mit dem positiven Potential und einmal alle Phasen mit dem negativen Potential verbunden sind. Sind nun die Zeitdauern der beiden passiven Schaltzustände gleich groß, wird ein Zwischenkreiskondensator des Wechselrichters hierdurch geringstmöglich belastet.

Gemäß einer Ausgestaltung des erfindungsgemäßen Verfahrens ist vorgesehen, dass im Verfahrensschritt b die PWM-Tastverhältnisse derartig bestimmt werden, dass positive PWM-Pulse der PWM-Tastverhältnisse für alle Phasen innerhalb der wenigstens einen PWM-Periode eine gemeinsame, senkrechte Achsensymmetrie aufweisen.

Vorteilhaft ist hierbei, dass die Belastung eines Zwischenkreiskondensators bzw. der Zwischenkreiskondensatoren des Wechselrichters verringert wird.

Gemäß einer Ausgestaltung des erfindungsgemäßen Verfahrens ist vorgesehen, dass im Verfahrensschritt b die PWM-Tastverhältnisse derartig bestimmt werden, dass eine Zeitdauer zwischen den Enden zweier aufeinanderfolgender passiver Schaltzuständen, während denen wenigstens der erste Phasenstrom und der zweite Phasenstrom gemessen werden sollen, konstant ist.

Vorteilhaft ist hierbei, dass eine konstante Abtastfrequenz der Phasenströme erzielt wird, wobei durch diese konstante Abtastfrequenz eine Vereinfachung des anisotropiebasierten Verfahrens und somit eine vereinfachte Bestimmung der Rotorlage ermöglicht wird.

Gemäß einer Ausgestaltung des erfindungsgemäßen Verfahrens ist vorgesehen, dass im Verfahrensschritt d das Messen wenigstens des ersten Phasenstroms und des zweiten Phasenstroms mittels wenigstens eines Stromsensors für jede zu messende Phase und mittels wenigstens eines Analog-Digital-Wandlers erfolgt, wobei der Analog-Digital-Wandler derartig ausgestaltet ist, dass ein Messen der Phasenströme jeweils zu einem vorbestimmten Zeitpunkt ermöglicht wird, wobei der Analog-Digital-Wandler insbesondere ein SAR-Analog-Digital-Wandler ist.

Vorteilhaft ist hierbei, dass dies eine einfache und exakte Bestimmung des jeweiligen Phasenstroms ermöglicht. Insbesondere kann durch den SAR-AD-Wandler der Phasenstrom zu einem beliebigen Zeitpunkt abgetastet werden. Hierbei kann sowohl ein AD-Wandler für alle Phasen mittels eines Multiplexers genutzt werden oder auch pro Phase jeweils ein separater AD-Wandler.

Die Erfindung betrifft zudem eine elektrische Maschine nach Anspruch 8.

Vorteilhaft ist hierbei, dass Fehler aufgrund von Wirbelströmen bei der Bestimmung der Rotorlage der elektrischen Maschine minimiert werden können. Des Weiteren kann die Temperaturabhängigkeit bei dieser Bestimmung verringert werden.

Zeichnungen

Fig. 1 zeigt ein Ausführungsbeispiel eines erfindungsgemäßen Verfahrens zur Bestimmung einer Rotorlage einer elektrischen, rotierenden Maschine.

Fig. 2 zeigt ein Ausführungsbeispiel einer erfindungsgemäßen elektrischen, rotierenden Maschine, welche dazu eingerichtet ist, ein erfindungsgemäßes Verfahren durchzuführen.

Fig. 3a bis 3d zeigen verschiedene Möglichkeiten von bestimmten PWM-Tastverhältnissen. In der Fig. 3a ist hierbei eine mittenzentrierte PWM aus dem Stand der Technik dargestellt. In den Fig. 3b bis 3d sind dagegen erfindungsgemäße PWM-Tastverhältnisse dargestellt.

Beschreibung von Ausführungsbeispielen

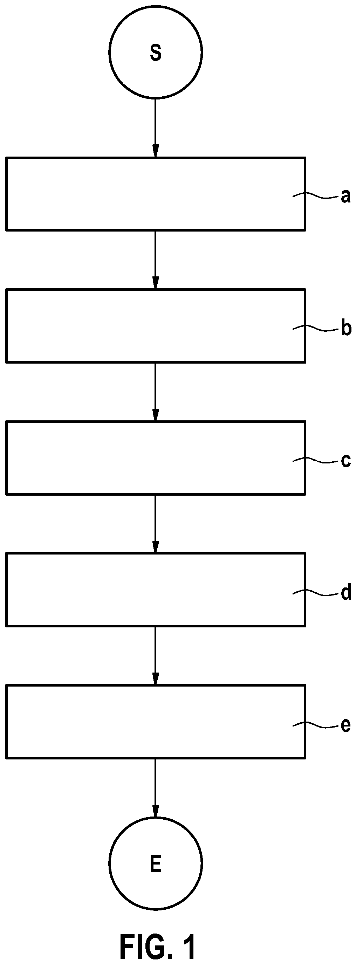

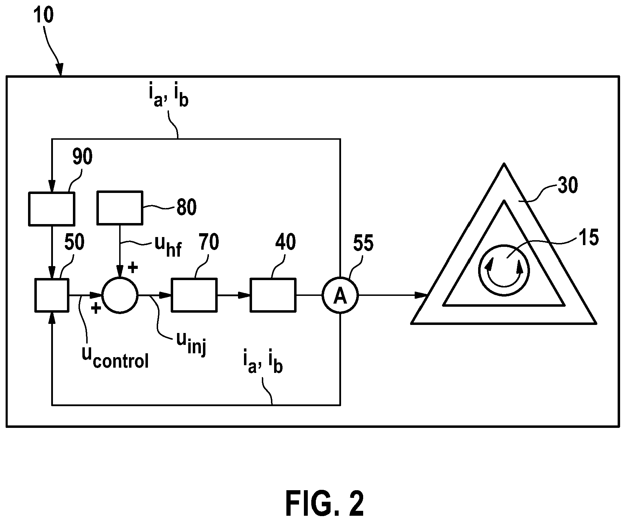

Fig. 1 zeigt ein Ausführungsbeispiel eines erfindungsgemäßen Verfahrens zur Bestimmung einer Rotorlage einer elektrischen, rotierenden Maschine. Die elektrische Maschine 10, beispielsweise nach Fig. 2, weist dabei eine Wicklungsgruppe 30 und einen PWM-gesteuerten Wechselrichter 40 zur Speisung der Wicklungsgruppe 30 auf.

Bei dem im Ausführungsbeispiel nach Fig. 1 dargestellten Verfahren werden nach dem Start S in einem Verfahrensschritt a Injektionsspannungen $u_{inj}$ während einer Reglerabtastperiode bestimmt, wobei sich die Injektionsspannungen $u_{inj}$ aus von einem Regler 50 zur Ansteuerung der elektrischen Maschine 10 vorgegebenen Spannungen $u_{control}$ und zusätzlichen hochfrequenten Spannungen $u_{hf}$ zusammensetzen. Die Dauer der Reglerabtastperiode und somit die Dauer zwischen dem ersten Reglerabtastschritt und dem zweiten Reglerabtastschritt kann insbesondere derartig gewählt werden, dass diese um ein Vielfaches größer ist als eine PWM-Periodendauer $T_{PWM}$.

Anschließend an den Verfahrensschritt a werden in einem Verfahrensschritt b PWM-Tastverhältnisse in Abhängigkeit von den in Verfahrensschritt a bestimmen Injektionsspannungen $u_{inj}$ derartig bestimmt, dass jeweils ein passiver Schaltzustand in der PWM-Perioden-Mitte $t_{PWM,M}$

und/oder am PWM-Perioden-Ende $t_{PWM,E}$ endet. Hierfür rechnet eine PWM-Einheit 70 die bestimmten Injektionsspannungen $u_{inj}$ in PWM-Tastverhältnisse um.

Anschließend wird in einem Verfahrensschritt c der Wechselrichter 40 mit den in Verfahrensschritt b bestimmten PWM-Tastverhältnissen in wenigstens einer PWM-Periode nach der Reglerabtastperiode angesteuert, um die elektrische Maschine 10 entsprechend anzusteuern.

Daraufhin wird in einem Verfahrensschritt d wenigstens ein erster Phasenstrom $i_a$ und ein zweiter Phasenstrom $i_b$ PWM-synchron jeweils zeitgleich gemessen, um je einen Stromverlauf aller Phasenströme $i_a$, $i_b$, $i_c$ zu erhalten, wobei das Messen innerhalb der wenigstens einen PWM-Periode jeweils im zeitlich letzten Drittel eines passiven Schaltzustands erfolgt. Insbesondere erfolgt das Messen der Phasenströme $i_a$, $i_b$ hierbei am Ende des jeweiligen passiven Schaltzustands. Das Messen erfolgt zudem zwischen zwei Reglerabtastschritten, also während einer Reglerabtastperiode, welche sich an die Reglerabtastperiode des Verfahrensschritts a anschließt.

Werden bei einer dreiphasig ausgestalteten elektrischen Maschine 10 beispielsweise lediglich der erste Phasenstrom $i_a$ und der zweite Phasenstrom $i_b$ gemessen, so kann ein dritter Phasenstrom $i_c$ mittels des ersten Kirchhoff'schen Gesetzes aus dem ersten Phasenstrom $i_a$ und dem zweiten Phasenstrom $i_b$ bestimmt werden:

$$i_c = -i_a - i_b$$

Alternativ kann der dritte Phasenstrom $i_c$ ebenfalls gemessen werden.

Abschließend wird in einem Verfahrensschritt e die Rotorlage der elektrischen Maschine 10 in Abhängigkeit der in Verfahrensschritt d erhaltenen Stromverläufe und den eingespeisten hochfrequenten Spannungen $u_{hf}$ bestimmt und anschließend das Verfahren beendet.

Die Rotorlage kann hierbei insbesondere bestimmt werden, indem die Stromänderung bestimmt wird, welche durch das Verändern der vorgegebenen Spannung $u_{control}$ im Verfahrensschritt a entsteht. Dabei erfolgt die Bestimmung der Stromänderung in Abhängigkeit von den im Verfahrensschritt d erhalten Stromverläufen der Phasenströme $i_a$, $i_b$, $i_c$ und der eingespeisten hochfrequenten Spannungen $u_{hf}$. Hierfür werden die im Verfahrensschritt d erhaltene Stromverläufe in einen ersten Strom, welcher ohne Veränderung der vorgegebenen Spannungen $u_{control}$ fließen würde, und einen zweiten Strom, welcher durch das Verändern der vorgegebenen Spannungen $u_{control}$ erzeugt wird, unterteilt. Der zweite Strom kann beispielsweise bestimmt werden, indem eine Differenz der in Verfahrensschritt d erhaltenen Phasenströme $i_a$, $i_b$, $i_c$ gebildet wird. Des Weiteren kann der erste Strom beispielsweise bestimmt werden, indem ein Mittelwert der in Verfahrensschritt d erhaltenen Phasenströme $i_a$, $i_b$, $i_c$ gebildet wird.

In einem alternativen, nicht bildlich dargestellten Ausführungsbeispiel kann das Verfahren regelmäßig neu gestartet werden, um fortlaufend die Rotorlage der elektrischen Maschine zu bestimmen.

Fig. 2 zeigt ein Ausführungsbeispiel einer erfindungsgemäßen elektrischen, rotierenden Maschine, welche dazu eingerichtet ist, ein erfindungsgemäßes Verfahren durchzuführen.

Dargestellt ist eine elektrische Maschine 10. Die elektrische Maschine 10 weist einen permanentmagnetischen Rotor 15 auf, welcher von einer Wicklungsgruppe 30 umgeben ist. Die elektrische Maschine 10 ist hierbei insbesondere dreiphasig ausgestaltet, was jedoch bildlich nicht dargestellt ist. Die Wicklungsgruppe 30 ist auf einem bildlich nicht dargestellten Stator angeordnet.

Des Weiteren ist die Wicklungsgruppe 30 mit einem Wechselrichter 40 verbunden, welcher die Wicklungsgruppe 30 bestromt und welcher beispielsweise als B6-Brücke ausgestaltet sein kann. Der Wechselrichter 40 ist wiederum mit einer PWM-Einheit 70 verbunden, welche den Wechselrichter 40 ansteuert. Hierbei erhält die PWM-Einheit 70 von einem Regler 50 vorgegebene Spannungen $u_{control}$ und von einer Hochfrequenz-Anregungseinheit 80 hochfrequente Spannungen $U_{hf}$, welche zu den vorgegebenen Spannungen $u_{control}$ addiert und dann als Injektionsspannungen $u_{inj}$ von der PWM-Einheit 70 in entsprechende PWM-Tastverhältnisse umgerechnet werden.

Die elektrische Maschine 10 weist für wenigstens eine erste Phase und eine zweite Phase je einen Stromsensor 55 auf, wobei lediglich ein Stromsensor 55 exemplarisch dargestellt ist. Mittels dieses Stromsensors 55 kann jeweils ein entsprechender Phasenstrom $i_a$, $i_b$, $i_c$ abgetastet werden. Zudem weist die elektrische Maschine 10 noch einen Analog-Digital-Wandler auf, welcher hier nicht dargestellt ist, sondern im Stromsensor 55 integriert ist. Der Analog-Digital-Wandler ist insbesondere derartig ausgestaltet, dass ein Messen der Phasenströme $i_a$, $i_b$ zu einem vorbestimmten Zeitpunkt ermöglicht wird, wobei der Analog-Digital-Wandler insbesondere ein SAR-Analog-Digital-Wandler ist. Der Stromsensor 55 kann beispielsweise als Messwiderstand oder als Hallsensor ausgestaltet sein.

Die Werte der erfassten Phasenströme $i_a$, $i_b$, $i_c$ werden dabei sowohl dem Regler 50 als auch einer Rotorlageeinheit 90 zur Verfügung gestellt. Die Rotorlageeinheit 90 ist hierbei dazu eingerichtet, in Abhängigkeit von den entsprechenden Stromverläufen der Phasenströme $i_a$, $i_b$, $i_c$ und den hochfrequenten Spannungen $u_{hf}$ eine Rotorlage des Rotors 15 zu bestimmen und diese Rotorlage unter anderem an den Regler 50 zu übermitteln. Der Regler 50 ist dazu eingerichtet, in Abhängigkeit von den Stromverläufen der Phasenströme $i_a$, $i_b$, $i_c$ und von der erhaltenen Rotorlage die vorgegebenen Spannungen $u_{control}$ zu bestimmen. Diese vorgegebenen Spannungen $u_{control}$ werden dann mit den hochfrequenten Spannungen $U_{hf}$ addiert und die Summe als bestimmte Injektionsspannungen $u_{inj}$, wie zuvor bereits beschrieben, an die PWM-Einheit 70 übermittelt.

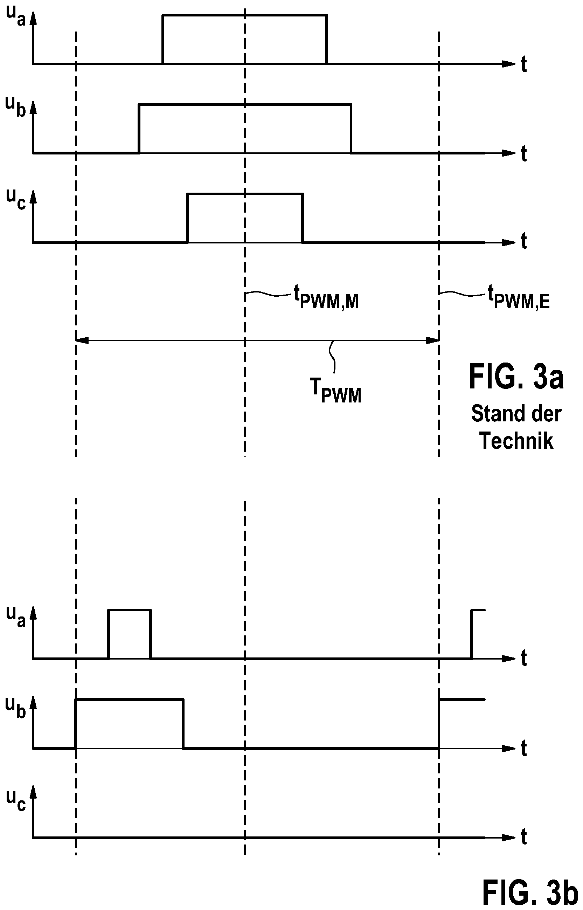

Fig. 3a bis 3d zeigen verschiedene Möglichkeiten von bestimmten PWM-Tastverhältnissen. In der Fig. 3a ist hierbei eine mittenzentrierte PWM aus dem Stand der Technik dargestellt. In den Fig. 3b bis 3d sind dagegen erfindungsgemäße PWM-Tastverhältnisse dargestellt.

In der Fig. 3a ist hierbei eine mittenzentrierte PWM aus dem Stand der Technik dargestellt. Dargestellt ist eine ganze PWM-Periode mit einer PWM-Periodendauer $T_{PWM}$ sowie das Ende der vorherigen und der Anfang der nachfolgenden PWM-Periode. Die PWM-Tastverhältnisse der einzelnen Phasenspannungen $u_a$, $u_b$ und $u_c$ sind hierbei über die Zeit t dargestellt und zentriert zur PMW-Perioden-Mitte $t_{PWM,M}$ ausgewählt. Eine Messung der Phasenströme $i_a$, $i_b$, $i_c$ erfolgt typischerweise in der PWM-Perioden-Mitte $t_{PWM,M}$ und/oder am PWM-Perioden-Ende $t_{PWM,E}$.

In Fig. 3b sind beispielshaft PWM-Tastverhältnisse dargestellt, welche pro PWM-Periodendauer $T_{PWM}$ nur einen passiven Schaltzustand aufweisen, wobei dieser passive Schaltzustand an dem Ende der PWM-Periode $t_{PWM,E}$ endet. Durch die entsprechende Bestimmung der PWM-Tastverhältnisse ist eine Zeitdauer des passiven Schaltzustands insbesondere maximal gewählt, wobei die vom Regler 50 bestimmten Injektionsspannungen $u_{inj}$ erzielt werden.

Hierbei können der erste und zweite Phasenstrom $i_a$, $i_b$ dann innerhalb des letzten Drittels des passiven Schaltzustands erfasst werden, in welchem durch die Einspeisung der Injektionsspannungen $u_{inj}$ gemäß den PWM-Tastverhältnissen aufgetretene Wirbelströme bereits abgeklungen sind. Insbesondere erfolgt eine Phasenstrommessung am Ende der PWM-Periode $T_{PWM,E}$, damit die Wirbelströme möglichst stark abgeklungen sind.

Des Weiteren ist ersichtlich, dass die positiven PWM-Pulse der PWM-Tastverhältnisse für alle Phasen innerhalb der wenigstens einen PWM-Periode eine gemeinsame, senkrechte Achsensymmetrie aufweisen.

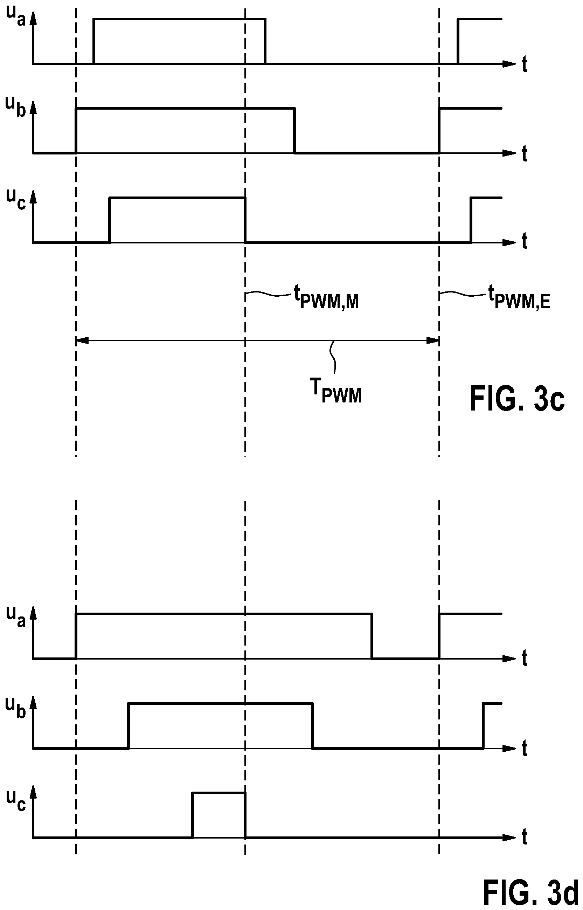

In den Fig. 3c und 3d sind dagegen PWM-Tastverhältnisse dargestellt, welche zwei passive Schaltzustände pro PWM-Periodendauer $T_{PWM}$ aufweisen. Ein erster passiver Schaltzustand endet hierbei jeweils in der PWM-Periode-Mitte $t_{PWM,M}$ und ein zweiter passiver Schaltzustand endet jeweils am PWM-Perioden-Ende $t_{PWM,E}$. Hierbei können die Phasenströme $i_a$, $i_b$ dann zweimal pro PWM-Periode innerhalb des letzten Drittels des jeweiligen passiven Schaltzustands gemessen werden, insbesondere jedoch einmal in der PWM-Periode-Mitte $t_{PWM,M}$ und einmal am Perioden-Ende $t_{PWM,E}$ und somit am jeweiligen Ende des passiven Schaltzustands. Durch die entsprechende Bestimmung der PWM-Tastverhältnisse sind die Zeitdauern der beiden passiven Schaltzustände insbesondere im Wesentlichen gleich groß.

Des Weiteren ist auch hier ersichtlich, dass die positiven PWM-Pulse der PWM-Tastverhältnisse für alle Phasen innerhalb der wenigstens einen PWM-Periode eine gemeinsame, senkrechte Achsensymmetrie aufweisen.

Insbesondere sind die PWM-Tastverhältnisse auch derartig gewählt, dass eine Zeitdauer zwischen den Enden zweier aufeinanderfolgender passiver Schaltzuständen, während denen wenigstens der erste Phasenstrom $i_a$ und der zweite Phasenstrom $i_b$ gemessen werden sollen, konstant ist und somit eine konstante Abtastfrequenz bei der Phasenstrommessung erzielt werden kann. Hierfür sind natürlich auch die Zeitpunkte der aufeinanderfolgenden Phasenstrommessungen entsprechend auszuwählen.

**Patentansprüche**

1. Verfahren zur Bestimmung einer Rotorlage einer mittels eines PWM-gesteuerten Wechselrichters (40) gespeisten, rotierenden, wenigstens dreiphasigen, elektrischen Maschine (10), umfassend die Verfahrensschritte:

   a. Bestimmen von Injektionsspannungen ($u_{inj}$) während einer Reglerabtastperiode, wobei sich die Injektionsspannungen aus von einem Regler (50) zur Ansteuerung der elektrischen Maschine (10) vorgegebenen Spannungen ($u_{control}$) und zusätzlichen hochfrequenten Spannungen ($u_{hf}$) zusammensetzen,

   b. Bestimmen von PWM-Tastverhältnissen in Abhängigkeit von den in Verfahrensschritt a bestimmen Injektionsspannungen ($u_{inj}$) derartig, dass jeweils ein passiver Schaltzustand in der PWM-Perioden-Mitte ($t_{PWM,M}$) und/oder am PWM-Perioden-Ende ($t_{PWM,E}$) endet, wobei ein passiver Schaltzustand vorliegt, wenn alle Phasen der elektrischen Maschine (10) auf einem gleichen Potential liegen,

   c. Ansteuern des Wechselrichters (40) mit den in Verfahrensschritt b bestimmten PWM-Tastverhältnissen in wenigstens einer PWM-Periode nach der Reglerabtastperiode, um die elektrische Maschine (10) entsprechend anzusteuern,

   d. PWM-synchrones Messen wenigstens eines ersten Phasenstroms ($i_a$) und jeweils zeitgleich eines zweiten Phasenstroms ($i_b$), um je einen Stromverlauf aller Phasenströme ($i_a$, $i_b$, $i_c$) der elektrischen Maschine (10) zu erhalten, wobei das Messen innerhalb der wenigstens einen PWM-Periode jeweils im zeitlich letzten Drittel des passiven Schaltzustands erfolgt,

   e. Bestimmen der Rotorlage in Abhängigkeit von den im Verfahrensschritt d erhaltenen Stromverläufen und den im Verfahrensschritt a eingespeisten hochfrequenten Spannungen ($u_{hf}$),

   **dadurch gekennzeichnet, dass** im Verfahrensschritt d das Messen wenigstens des ersten Phasenstroms ($i_a$) und des zweiten Phasenstroms ($i_b$) jeweils am Ende des passiven Schaltzustands erfolgt.

2. Verfahren nach einem der vorhergehenden Ansprüche, **dadurch gekennzeichnet, dass** im Verfahrensschritt b die PWM-Tastverhältnisse derartig bestimmt werden, dass eine Zeitdauer des passiven Schaltzustands, während welchem im Verfahrensschritt d gemessen werden soll, maximal lang ist.

3. Verfahren nach einem der vorhergehenden Ansprüche, **dadurch gekennzeichnet, dass** im Verfahrensschritt b die PWM-Tastverhältnisse derartig bestimmt werden, dass je ein passiver Schaltzustand in der PWM-Perioden-Mitte ($t_{PWM,M}$) und am PWM-Perioden-Ende ($t_{PWM,E}$) endet, und dass im Verfahrensschritt d das Messen wenigstens des ersten Phasenstroms ($i_a$) und des zweiten Phasenstroms ($i_b$) innerhalb der PWM-Periode je einmal pro passivem Schaltzustand erfolgt.

4. Verfahren nach Anspruch 3, **dadurch gekennzeichnet, dass** im Verfahrensschritt b die PWM-Tastverhältnisse derartig bestimmt werden, dass Zeitdauern der beiden passiven Schaltzustände, während welcher im Verfahrensschritt d gemessen werden sollen, im Wesentlichen gleich groß sind.

5. Verfahren nach einem der vorhergehenden Ansprüche, **dadurch gekennzeichnet, dass** im Verfahrensschritt b die PWM-Tastverhältnisse derartig bestimmt werden, dass positive PWM-Pulse der PWM-Tastverhältnisse für alle Phasen innerhalb der wenigstens einen PWM-Periode eine gemeinsame, senkrechte Achsensymmetrie aufweisen.

6. Verfahren nach einem der vorhergehenden Ansprüche, **dadurch gekennzeichnet, dass** im Verfahrensschritt b die PWM-Tastverhältnisse derartig bestimmt werden, dass eine Zeitdauer zwischen den Enden zweier aufeinanderfolgender passiver Schaltzuständen, während denen wenigstens der erste Phasenstrom ($i_a$) und der zweite Phasenstrom ($i_b$) gemessen werden sollen, konstant ist.

7. Verfahren nach einem der vorhergehenden Ansprüche, **dadurch gekennzeichnet, dass** im Verfahrensschritt d das Messen wenigstens des ersten Phasenstroms ($i_a$) und des zweiten Phasenstroms ($i_b$) mittels wenigstens eines Stromsensors (55) für jede zu messende Phase und mittels wenigstens eines Analog-Digital-Wandlers erfolgt, wobei der Analog-Digital-Wandler derartig ausgestaltet ist, dass ein Messen der Phasenströme ($i_a$, $i_b$) jeweils zu einem vorbestimmten Zeitpunkt ermöglicht wird, wobei der Analog-Digital-Wandler insbesondere ein SAR-Analog-Digital-Wandler ist.

8. Elektrische Maschine (10), wobei die elektrische Maschine (10) rotierend und wenigstens dreiphasig ausgestaltet und mittels eines PWM-gesteuerten Wechselrichters (40) gespeist ist, **dadurch gekennzeichnet, dass** die elektrische Maschine (10) ein Verfahren nach einem der Ansprüche 1 bis 7 durchführt.

**Claims**

1. Method for determining a rotor position of a rotating, at least three-phase, electric machine (10) fed by means of a PWM-controlled inverter (40), comprising the method steps:

    a. determining injection voltages ($u_{inj}$) during a controller sampling period, the injection voltages being composed of voltages ($u_{control}$) predetermined by a controller (50) for actuating the electric machine (10) and additional high-frequency voltages ($u_{hf}$),
    b. determining PWM duty factors as a function of the injection voltages ($u_{inj}$) determined in method step a such that in each case a passive switching state ends in the middle of the PWM period ($t_{PWM,M}$) and/or at the end of the PWM period ($t_{PWM,E}$), a passive switching state being present when all phases of the electric machine (10) are at the same potential,
    c. actuating the inverter (40) with the PWM duty factors determined in method step b in at least one PWM period after the controller sampling period in order to actuate the electric machine (10) accordingly,
    d. PWM-synchronous measuring of at least one first phase current ($i_a$) and in each case simultaneously a second phase current ($i_b$) in order to obtain a current profile of all phase currents ($i_a$, $i_b$, $i_c$) of the electric machine (10), the measuring taking place within the at least one PWM period in each case in the last third of the passive switching state,
    e. determining the rotor position as a function of the current profiles obtained in method step d and the fed-in high-frequency voltages ($u_{hf}$) in method step a,

    **characterized in that** in method step d, at least the first phase current ($i_a$) and the second phase current ($i_b$) are each measured at the end of the passive switching state.

2. Method according to any one of the preceding claims, **characterized in that** in method step b, the PWM duty factors are determined such that a time duration of the passive switching state during which measurements are to be made in method step d is maximally long.

3. Method according to any one of the preceding claims, **characterized in that** in method step b, the PWM duty factors are determined such that a passive switching state ends in the middle of the PWM period ($t_{PWM,M}$) and at the end of the PWM period ($t_{PWM,E}$), and that in method step d, at least the first phase current ($i_a$) and the second phase current ($i_b$) are measured once per passive switching state within the PWM period.

4. Method according to Claim 3, **characterized in that** in method step b, the PWM duty factors are determined such that time durations of the two passive switching states during which measurements are to be made in method step d are essentially the same size.

5. Method according to any one of the preceding claims, **characterized in that** in method step b, the PWM duty factors are determined such that positive PWM pulses of the PWM duty factors for all phases within the at least one PWM period have a common, vertical axis symmetry.

6. Method according to any one of the preceding claims, **characterized in that** in method step b, the PWM duty factors are determined such that a time duration between the ends of two successive passive switching states, during which at least the first phase current ($i_a$) and the second phase current ($i_b$) are to be measured, is constant.

7. Method according to any one of the preceding claims, **characterized in that** in method step d, at least the first phase current ($i_a$) and the second phase current ($i_b$) are measured by means of at least one current sensor (55) for each phase to be measured and by means of at least one analogue-digital converter, wherein the analogue-digital converter is designed such that a measurement of the phase currents ($i_a$, $i_b$) is made possible in each case at a predetermined point in time, wherein the analogue-digital converter is particularly an SAR analogue-digital converter.

8. Electric machine (10), the electric machine (10) being designed to be rotating and at least three-phase and being fed by means of a PWM-controlled inverter (40), **characterized in that** the electric machine (10) carries out a method according to any one of Claims 1 to 7.

**Revendications**

1. Procédé permettant de déterminer une position de rotor d'une machine électrique (10) rotative, au moins triphasée, alimentée au moyen d'un onduleur (40) commandé par MLI, comprenant les étapes de procédé consistant à :

   a) déterminer des tensions d'injection ($u_{inj}$) pendant une période de balayage de régulateur, dans lequel les tensions d'injection sont composées de tensions ($u_{control}$) prédéfinies par un régulateur (50) pour le pilotage de la machine électrique (10) et de tensions haute fréquence supplémentaires ($u_{hf}$),
   b) déterminer des rapports cycliques de MLI en fonction des tensions d'injection ($u_{inj}$) déterminées à l'étape de procédé a) de telle sorte qu'un état de commutation passif se termine respectivement au centre de la période de MLI ($t_{PWM,M}$) et/ou à la fin de la période de MLI ($t_{PWM,E}$), un état de commutation passif étant présent lorsque toutes les phases de la machine électrique (10) sont au même potentiel,
   c) piloter l'onduleur (40) avec les rapports cycliques de MLI déterminés à l'étape de procédé b) dans au moins une période de MLI après la période de balayage de régulateur pour piloter la machine électrique (10) de manière adéquate,
   d) mesurer de manière synchrone en MLI au moins un premier courant de phase ($i_a$) et respectivement en même temps un deuxième courant de phase ($i_b$) pour obtenir respectivement une courbe de courant de tous les courants de phase ($i_a$, $i_b$, $i_c$) de la machine électrique (10), dans lequel la mesure dans ladite au moins une période de MLI a lieu respectivement dans le dernier tiers dans le temps de l'état de commutation passif,
   e) déterminer la position de rotor en fonction des courbes de courant obtenues à l'étape de procédé d) et des tensions haute fréquence ($u_{hf}$) injectées à l'étape de procédé a),

   **caractérisé en ce qu'**à l'étape de procédé d), la mesure au moins du premier courant de phase ($i_a$) et du deuxième courant de phase ($i_b$) a lieu respectivement à la fin de l'état de commutation passif.

2. Procédé selon l'une quelconque des revendications précédentes, **caractérisé en ce qu'**à l'étape de procédé b), les rapports cycliques de MLI sont déterminés de telle sorte qu'une durée de l'état de commutation passif pendant lequel la mesure doit être effectuée à l'étape de procédé d) est maximale.

3. Procédé selon l'une quelconque des revendications précédentes, **caractérisé en ce qu'**à l'étape de procédé b), les rapports de MLI sont déterminés de telle sorte qu'un état de commutation passif se terme au centre de la période de MLI ($t_{PWM,M}$) et à la fin de la période de MLI ($t_{PWM,E}$), respectivement, et **en ce qu'**à l'étape de procédé d), la mesure au moins du premier courant de phase ($i_a$) et du deuxième courant de phase ($i_b$) est effectuée dans la période de MLI respectivement une fois par état de commutation passif.

4. Procédé selon la revendication 3, **caractérisé en ce qu'**à l'étape de procédé b), les rapports cycliques de MLI sont déterminés de telle sorte que les durées des deux états de commutation passifs pendant lesquels la mesure doit être effectuée à l'étape de procédé d) sont substantiellement identiques.

5. Procédé selon l'une quelconque des revendications précédentes, **caractérisé en ce qu'**à l'étape de procédé b), les rapports cycliques de MLI sont déterminés de telle sorte que des impulsions de MLI positives des rapports cycliques de MLI présentent une symétrie axiale verticale commune pour toutes les phases dans ladite au moins une période de MLI.

6. Procédé selon l'une quelconque des revendications précédentes, **caractérisé en ce qu'**à l'étape de procédé b), les rapports cycliques de MLI sont déterminés de telle sorte qu'une durée entre les fins de deux états de commutation passifs consécutifs, pendant lesquels au moins le premier courant de phase ($i_a$) et le deuxième courant de phase ($i_b$) sont à mesurer, soit constante.

7. Procédé selon l'une quelconque des revendications précédentes, **caractérisé en ce qu'**à l'étape de procédé d), la mesure au moins du premier courant de phase ($i_a$) et du deuxième courant de phase ($i_b$) est effectuée au moyen d'au moins un capteur de courant (55) pour chaque phase à mesurer et au moyen d'au moins un convertisseur analogique/numérique, dans lequel le convertisseur analogique/numérique est configuré de telle sorte qu'une mesure des courants de phase ($i_a$, $i_b$) soit possible respectivement à un instant prédéterminé, dans lequel le convertisseur analogique/numérique est en particulier un convertisseur analogique/numérique SAR.

8. Machine électrique (10), dans laquelle la machine électrique (10) est configurée de manière rotative et au moins triphasée et est alimentée au moyen d'un onduleur commandé par MLI (40), **caractérisée en ce que** la machine électrique (10) exécute un procédé selon l'une quelconque des revendications 1 à 7.

**FIG. 1**

**FIG. 2**

$u_a$

$u_b$

$u_c$

$t$

$t$

$t$

$t_{PWM,M}$

$t_{PWM,E}$

$T_{PWM}$

# FIG. 3a
Stand der
Technik

$u_a$

$u_b$

$u_c$

$t$

$t$

$t$

# FIG. 3b

FIG. 3c

FIG. 3d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009039672 A1
- DE 102017210071 A1
- DE 102016205462